# EUROPEAN PATENT APPLICATION

(11) **EP 4 722 564 A1**
(43) Date of publication of application: **08.04.2026**
(21) Application number: 24813838.0
(22) Date of filing: 20.03.2024
(51) Int. Cl.: F16H 48/10, F16H 48/11, F16H 37/08, B60K 17/04, B60K 17/06, B60K 1/00

(54) **MOTOR DRIVING ASSEMBLY, AUTOMOBILE TRANSMISSION SYSTEM, AND AUTOMOBILE**

(30) Priority: 26.05.2023 CN 202310605355
(71) Applicant: Wuxi InfiMotion Propulsion Technology Co., Ltd., Wuxi, Jiangsu 214181 (CN); Wuxi InfiMotion Technology Co., Ltd., Wuxi, Jiangsu 214181 (CN)
(72) Inventor: ZHAO, Yuting, Wuxi, Jiangsu 214181 (CN); MA, Feilong, Wuxi, Jiangsu 214181 (CN); LIU, Xing, Wuxi, Jiangsu 214181 (CN); YU, Haisheng, Wuxi, Jiangsu 214181 (CN); LIN, Xiaozhe, Wuxi, Jiangsu 214181 (CN)
(74) Representative: Murgitroyd & Company
(86) International application number: PCT/CN2024/082704
(87) International publication number: WO 2024/244632

(57) **Abstract**

A motor driving assembly, an automobile transmission system, and an automobile, relating to the technical field of automobiles. The motor driving assembly comprises a motor (3), a planet carrier assembly (5), a first sun gear (2), a first planet gear structure, a second planet gear (7), a third planet gear (10), a ring gear (8), and a housing (15); a second sun gear (14) is arranged on a first half axle (1); a third sun gear (12) is arranged on a second half axle (13); the two ends of the planet carrier assembly (5) are rotatably connected to the housing (15); the ring gear (8) is fixedly connected into the housing (15); the first planet gear structure and the third planet gear (10) are respectively rotatably connected to the planet carrier assembly (5); the second planet gear (7) is sleeved on a gear shaft (53) of the first planet gear structure; the first planet gear structure is meshed with the ring gear (8); the second planet gear (7) is meshed with the second sun gear (14); the third planet gear (10) is separately meshed with the second planet gear (7) and the third sun gear (12); the motor (3) is drivingly connected to the first sun gear (2); and the first sun gear (2) is meshed with the first planet gear structure. The motor driving assembly realizes both speed reduction and differential functions, has a more compact structure, occupies less space, and is lightweight.

## Description

### Technical Field

The present invention relates to the technical field of automobiles, and more particularly, to a motor driving assembly, an automobile transmission system, and an automobile.

### Background Art

With the development of the new energy vehicle industry, electric vehicles have become a prevailing trend. In current electric vehicles, the driving assembly typically includes a motor, a transmission, and a differential. The motor's output torque and rotational speed are modified by the transmission and then sequentially transferred via a transmission shaft and differential to the left and right half axles. During straight-line driving, the differential ensures identical rotational speeds for both half axles. When turning, the differential passively enables differing rotational speeds between the left and right half axles, ensuring the outer wheel rotates faster than the inner wheel to maintain driving safety and performance. In conventional driving assemblies, transmissions are predominantly designed with a parallel-axis layout and employ a bevel gear differential for power distribution. The transmission is drivingly connected to the differential via a transmission shaft, with both the transmission and the differential existing as independent structures, and such driving assembly results in excessive volume and weight, which hinder the lightweight development of the electric vehicles.

### Summary of the Invention

The present invention aims to solving the problem of excessive volume and high weight associated with existing driving assemblies.

In order to solve the above-mentioned problems, the present invention provides a motor driving assembly for driving a first half axle and a second half axle, which includes a motor, a transmission mechanism and a housing, where the transmission mechanism includes a planet carrier assembly, a first sun gear, a first planet gear structure, a second planet gear, a third planet gear and a ring gear; a second sun gear is arranged on a first half axle; a third sun gear is arranged on a second half axle; the two ends of the planet carrier assembly are rotatably connected to the housing; the ring gear is fixedly connected into the housing; the first planet gear structure and the third planet gear are respectively rotatably connected to the planet carrier assembly; the second planet gear is sleeved on a gear shaft of the first planet gear structure or is rotatably connected to the planet carrier assembly; the first planet gear structure is meshed with the ring gear; the second planet gear is meshed with the second sun gear; the third planet gear is separately meshed with the second planet gear and the third sun gear; the motor is drivingly connected to the first sun gear; and the first sun gear is meshed with the first planet gear structure.

The present invention provides a motor driving assembly having, but not limited to, the following technical effects as compared with the prior art:

The first half axle may be a left half axle of an automobile, and the second half axle is a right half axle of the automobile; the motor may be coaxially arranged on the first half axle and is drivingly connected to the first sun gear; the housing provides a carrier for the rotation of the planet carrier assembly and the fixing of the ring gear; when the motor rotates, the first sun gear is driven to rotate, and then the first sun gear drives the first planet gear structure to rotate itself; and since the ring gear meshed with the first planet gear structure is fixed, then the rotation of the first sun gear not only drives the first planet gear structure to rotate itself, but also drives the first planet gear structure to revolve around the first sun gear, that is to say, the planet carrier assembly is driven to rotate relative to the housing, and since the second planet gear is sleeved on a gear shaft of the first planet gear structure or is rotatably connected to the planet carrier assembly, the rotation of the planet carrier assembly will drive the second planet gear to revolve around the first sun gear. In this way, a torque transmission path of the motor to the first half axle is: a motor-a first sun gear-a first planet gear structure-a planet carrier assembly-a second planet gear-a second sun gear-a first half axle; a torque transmission path of the motor to the second half axle is: a motor-a first sun gear-a first planet gear structure-a planet carrier assembly-a second planet gear-a third planet gear-a third sun gear-a second half axle, when the automobile runs in a straight line, the second planet gear and the third planet gear only revolve around the first sun gear under the drive of the planet carrier assembly, and the second planet gear and the third planet gear do not rotate themselves, so that the rotational speeds of the first half axle and the second half axle are the same when the automobile runs; however, when the automobile turns, the second planet gear and the third planet gear revolve, and at the same time, the second planet gear and the third planet gear also passively rotate, thereby realizing that the rotational speeds of the first half axle and the second half axle are different, and thus realizing the functions of a conventional speed reducer and a differential. The transmission mechanism in the motor driving assembly of the present invention integrates the speed reduction function and the differential function, abandons the transmission shaft between the conventional speed reducer and the differential, and also eliminates the half axle bevel gear and the planet bevel gear which are arranged at a right angle in the conventional differential, all the gears in the motor driving assembly may be round gears arranged with parallel axes, which has a more compact structure, fewer parts, less space, lighter weight, higher transmission efficiency and higher power density than those in the conventional driving assembly.

Further, the second sun gear and the third sun gear have a same number of teeth.

Further, the second sun gear is arranged at an end of the first half axle adjacent to the second half axle and the third sun gear is arranged at an end of the second half axle adjacent to the first half axle.

Further, the planet carrier assembly includes a first side planet carrier, a second side planet carrier, a first planet gear shaft and a second planet gear shaft, the first side planet carrier and the second side planet carrier are connected via the first planet gear shaft, the first planet gear structure is sleeved on the first planet gear shaft, and the third planet gear is rotatably connected to the second side planet carrier via the second planet gear shaft.

Further, the first planet gear structure includes a first left planet gear sleeved on the first planet gear shaft, the first left planet gear being meshed with the first sun gear and the ring gear, respectively.

Further, the first planet gear structure includes a first left planet gear and a first right planet gear, the first left planet gear and the first right planet gear are fixedly connected via a connecting shaft, the connecting shaft is sleeved on the first planet gear shaft, the first left planet gear is meshed with the first sun gear, the first right planet gear is meshed with the ring gear, and the second planet gear is sleeved on the connecting shaft or the first planet gear shaft.

Further, the planet carrier assembly has one end rotatably connected to the housing via a first bearing and the other end rotatably connected to the housing via a second bearing;
or/and the second planet gears are provided in a number of at least three, one of the third planet gears being meshed between each of the second planet gears and the third sun gear.

Further, the first left planet gear and the first right planet gear are respectively provided in a number of at least three.

The present invention also provides an automobile transmission system including a motor driving assembly as hereinbefore described.

Since the technical improvements and technical effects of the automobile transmission system are the same as those of the motor driving assembly, the description of the automobile transmission system will not be repeated.

The present invention also provides an automobile including an automobile transmission system as hereinbefore described.

Since the technical improvements and technical effects of the automobile are the same as those of the automobile transmission system, the description of the automobile will not be repeated.

### Brief Description of the Drawings

FIG. 1 is a first schematic structural view of a motor driving assembly according to an embodiment of the present invention; and
FIG. 2 is a second schematic structural view of a motor driving assembly according to an embodiment of the present invention.

Description of reference numerals:
1. first half axle; 2. first sun gear; 3, motor; 4. first bearing; 5. planet carrier assembly; 51. first side planet carrier; 52. second side planet carrier; 53. first planet gear shaft; 54. second planet gear shaft; 6. first left planet gear; 7. second planet gear; 8. ring gear; 9. first right planet gear; 10. third planet gear; 11. second bearing; 12. third sun gear; 13. second half axle; 14. second sun gear; 15. housing.

### Detailed Description of the Invention

To render the aforementioned objectives, features, and advantages of the present invention more apparent and comprehensible, embodiments of the present invention are described in detail below with reference to the accompanying drawings.

In the description of the present invention, it is to be understood that directional or positional relationships indicated by terms such as "left", "right", "front", and "rear" are based on orientations or positional relationships illustrated in the accompanying drawings. These terms are used solely to facilitate the description of the present invention and simplify the explanation, rather than implying or requiring that the referenced apparatus or component must adopt a specific orientation or be constructed and operated in a specific orientation, which therefore shall not be construed as limiting the present invention.

Furthermore, in the accompanying drawings: the X-axis represents the longitudinal direction (i.e., front-rear direction), where the positive direction of X-axis denotes "front" and the negative direction of X-axis denotes "rear"; the Y-axis represents the transverse direction (i.e., left-right direction), where the positive direction Y-axis denotes "left" and the negative direction Y-axis denotes "right".

It is also noted that the aforementioned definitions of the X-axis and Y-axis are provided solely to facilitate the description of the present invention and simplify the explanation. They do not imply or require that the referenced apparatus or component must adopt a specific orientation or be constructed and operated in a specific orientation, which therefore shall not be construed as limiting the present invention.

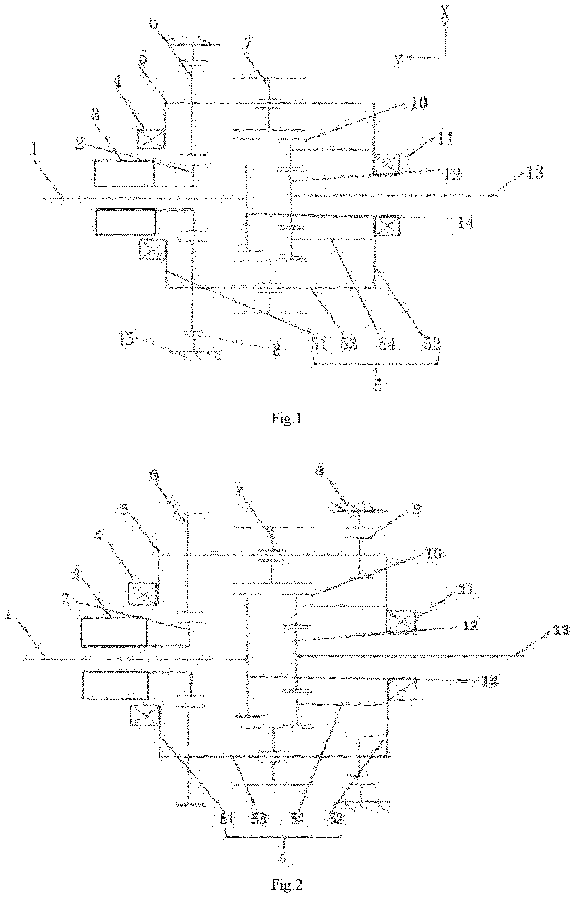

With reference to FIGS. 1 and 2, provided in an embodiment of the present invention is a motor driving assembly for driving a first half axle 1 and a second half axle 13, characterized by including a motor 3, a transmission mechanism and a housing 15, where the transmission mechanism includes a planet carrier assembly 5, a first sun gear 2, a first planet gear structure, a second planet gear 7, a third planet gear 10 and a ring gear 8; a second sun gear 14 is arranged on a first half axle 1; a third sun gear 12 is arranged on a second half axle 13; the two ends of the planet carrier assembly 5 are rotatably connected to the housing 15; the ring gear 8 is fixedly connected into the housing 15; the first planet gear structure and the third planet gear 10 are respectively rotatably connected to the planet carrier assembly 5; the second planet gear 7 is sleeved on a gear shaft 5 of the first planet gear structure or is rotatably connected to the planet carrier assembly 5; the first planet gear structure is meshed with the ring gear 8; the second planet gear 7 is meshed with the second sun gear 14; the third planet gear 10 is separately meshed with the second planet gear 7 and the third sun gear 12; the motor 3 is drivingly connected to the first sun gear 2; and the first sun gear 2 is meshed with the first planet gear structure.

It should be noted that the two ends of the planet carrier assembly 5 are rotatably connected to the housing 15, which means that the left and right ends of the planet carrier assembly 5 are rotatably connected to the housing 15. Although the "contact" type connection relationship between the planet carrier assembly 5 and the housing 15 is not directly shown in FIG. 1 or FIG. 2, the housing 15 in FIG. 1 and FIG. 2 is merely a schematic structure, and the shape of the housing is not limited to that shown in the drawings. Referring to FIGS. 1 and 2, alternatively, the planet carrier assembly 5 may have one end rotatably connected to the housing 15 via a first bearing 4 and the other end rotatably connected to the housing 15 via a second bearing 11. The left and right ends of the planet carrier assembly 5 are supported on the housing 15 by the first bearing 4 and the second bearing 11, respectively, so as to rotate smoothly.

In the present embodiment, the first half axle 1 may be a left half axle of an automobile, and the second half axle 13 is a right half axle of the automobile; the motor 3 may be coaxially arranged on the first half axle 1 and is drivingly connected to the first sun gear 2; the housing 15 provides a carrier for the rotation of the planet carrier assembly 5 and the fixing of the ring gear 8; when the motor 3 rotates, the first sun gear 2 is driven to rotate, and then the first sun gear 2 drives the first planet gear structure to rotate itself; and since the ring gear 8 meshed with the first planet gear structure is fixed, then the rotation of the first sun gear 2 will not only drive the rotation of the first planet gear structure not only drives the first planet gear structure to rotate itself, but also drives the first planet gear structure to revolve around the first sun gear 2, that is to say, the planet carrier assembly 5 is driven to rotate relative to the housing 15, and since the second planet gear 7 is sleeved on a gear shaft of the first planet gear structure or is rotatably connected to the planet carrier assembly 5, the rotation of the planet carrier assembly 5 will drive the second planet gear 7 to revolve around the first sun gear 2. In this way, a torque transmission path of the motor 3 to the first half axle 1 is: a motor 3-a first sun gear 2-a first planet gear structure-a planet carrier assembly 5-a second planet gear 7-a second sun gear 14-a first half axle 1; a torque transmission path of the motor 3 to the second half axle 13 is: a motor 3-a first sun gear 2-a first planet gear structure-a planet carrier assembly 5-a second planet gear 7-a third planet gear 10-a third sun gear 12-a second half axle 13,when the automobile runs in a straight line, the second planet gear 7 and the third planet gear 10 only revolve around the first sun gear 2 under the drive of the planet carrier assembly 5, and the second planet gear 7 and the third planet gear 10 do not rotate themselves, so that the rotational speeds of the first half axle 1 and the second half axle 13 are the same when the automobile runs; however, when the automobile turns, the second planet gear 7 and the third planet gear 10 revolve, and at the same time, the second planet gear 7 and the third planet gear 10 also passively rotate, thereby realizing that the rotational speeds of the first half axle 1 and the second half axle 13 are different, and thus realizing the functions of a conventional speed reducer and a differential. The transmission mechanism in the motor driving assembly of the present invention integrates the speed reduction function and the differential function, abandons the transmission shaft between the conventional speed reducer and the differential, and also eliminates the half axle bevel gear and the planet bevel gear which are arranged at a right angle in the conventional differential, all the gears in the motor driving assembly may be round gears arranged with parallel axes, which has a more compact structure, fewer parts, less space, lighter weight, higher transmission efficiency and higher power density than those in the conventional driving assembly, can realize a wide range of speed ratio, may bear a large range of rotational speed of the motor 3, and can meet different design requirements.

Of course, in other embodiments, the first half axle 1 may be the right half axle and the second half axle 13 may be the left half axle.

It should be noted that in order to realize a speed reducing function of the conventional speed reducer and a differential function of the conventional differential, in addition to a transmission shaft and two bevel gears at both ends of the transmission shaft therebetween, the conventional speed reducer has at least one housing, one planet carrier assembly, one sun gear, one ring gear, a plurality of planet gears, etc., the conventional differential has at least one housing, one planet carrier assembly, one cone-shaped planet gear, one large ring bevel gear sleeved on a half axle, two cone-shaped half axle gears fixed on the half axle, etc. and the conventional driving assembly achieves its speed reduction and torque amplification functions, as well as differential functionality during turns, through the aforementioned speed reducer, transmission shaft, and differential of the above construction. However, this construction employs a large number of gears with varying geometries, occupies substantial space, and exhibits questionable transmission efficiency. However, the inventive improvement of the present invention is at least as follows: the speed reduction function and the differential function are integrated in one housing 15, exclusively employing circular gears, and the number of gears is small; only one housing 15, one ring gear 8, one planet carrier assembly 5, etc. are used; all the gear axes are parallel, except for the planet gears arranged on the planet carrier assembly 5, all the other gears are arranged inside the planet carrier assembly 5; after the corresponding gears are meshed, the structure is compact, and the space occupation is greatly reduced; furthermore, the second sun gear 14 on the first half axle 1 directly is meshed with the second planet gears 7; and the third sun gear 12 on the second half axle 13 is indirectly meshed with the second planet gear 7 via the third planet gear 10, so as to ensure that the second planet gear 7 and the third planet gear 10 do not rotate themselves when the automobile runs in a straight line, and the motor driving assembly only has the function of reducing the speed and increasing the torque, and also ensures that the second planet gear 7 and the third planet gear 10 rotate themselves when the automobile runs in a turn, so that the motor driving assembly has both the speed reduction and torque amplification functions, as well as differential functionality.

In addition, the motor driving assembly, due to the speed reduction function and differential function integrated together, can lubricate all the gears at the same time, the lubricating oil does not need to separate two paths to the traditional automobile to lubricate the speed reducer and differential, reducing the amount of lubricating oil, and also reducing the length of lubricating oil pipeline and the space occupied by the pipeline; furthermore, while the conventional planet gears of the differential are not only within the housing of the differential, but even inside the carrier, the lubricating oil does not readily enter to lubricate the gears, the second planet gears 7 and the third planet gears 10 of the present embodiment may be at least partially exposed to the outside of the planet carrier assembly 5 to facilitate access to the lubricating oil.

It should be noted that an automobile with a motor driving assembly may be either a front-wheel drive vehicle or a rear-wheel drive vehicle, i.e., the motor driving assembly may be arranged at either the front or the rear axle.

Alternatively, the second sun gear 14 and the third sun gear 12 have a same number of teeth.

In the present embodiment, since the rotational speed of the second sun gear 14 indicates the rotational speed of the first half axle 1, and the rotational speed of the third sun gear 12 indicates the rotational speed of the second half axle 13, it is necessary that the number of teeth of the second sun gear 14 and the third sun gear 12 be the same in order to ensure that the rotational speed of the first half axle 1 and the rotational speed of the second half axle 13 are the same when the automobile is running in a straight line.

It should be noted that the second sun gear 14 and the third sun gear 12 have the same number of teeth but different diameters, and the diameter of the third sun gear 12 is smaller than the diameter of the second sun gear 14, so that the third planet gears 10 may be arranged between the third sun gear 12 and the second planet gear 7.

Referring to FIG. 1, alternatively, the second sun gear 14 is provided at an end of the first half axle 1 adjacent to the second half axle 13, and the third sun gear 12 is provided at an end of the second half axle 13 adjacent to the first half axle 1.

In the present embodiment, the second sun gear 14 is provided at the right end of the first half axle 1 and the third sun gear 12 is provided at the left end of the second half axle 13, i.e., the second sun gear 14 and the third sun gear 12 are as adjacent to each other as possible to reduce the axial length of the entire motor driving assembly.

Referring to FIGS. 1 and 2, alternatively, the planet carrier assembly 5 includes a first side planet carrier 51, a second side planet carrier 52, a first planet gear shaft 53 and a second planet gear shaft 54, the first side planet carrier 51 and the second side planet carrier 52 being connected by the first planet gear shaft 53, the first planet gear structure being sleeved on the first planet gear shaft 53, and the third planet gear 10 being rotatably connected to the second side planet carrier 52 by the second planet gear shaft 54.

In the present embodiment, the first side planet carrier 51, the second side planet carrier 52, the first planet gear shaft 53, and the second planet gear shaft 54 together constitute the planet carrier assembly 5. Both ends of the first planet gear shaft 53 may be press-fitted into the first side planet carrier 51 and the second side planet carrier 52, where the first planet gear structure is specifically sleeved on the first planet gear shaft 53 in the planet carrier assembly 5, and the third planet gear 10 is rotatably connected to the second side planet carrier 52 via the second planet gear shaft 54.

The left and right ends of the planet carrier assembly 5 are supported on the housing 15 by the first bearing 4 and the second bearing 11, respectively, so as to rotate smoothly. Specifically, the first side planet carrier 51 of the planet carrier assembly 5 is supported on the housing 15 by the first bearing 4, and the second side planet carrier 52 of the planet carrier assembly 5 is supported on the housing 15 by the second bearing 11.

Referring to FIG. 1, alternatively, the first planet gear structure includes a first left planet gear 6 sleeved on the first planet gear shaft 53, the first left planet gear 6 being meshed with the first sun gear 2 and the ring gear 8, respectively.

In the present embodiment, the first planet gear structure includes only the first left planet gear 6, which is meshed with the first sun gear 2 and at the same time is meshed with the ring gear 8 (as shown in FIG. 1). In this way, a torque transmission path of the motor 3 to the first half axle 1 is: a motor 3-a first sun gear 2-a first left planet gear 6-a planet carrier assembly 5-a second planet gear 7-a second sun gear 14-a first half axle 1; a torque transmission path of the motor 3 to the second half axle 13 is: a motor 3-a first sun gear 2-a first left planet gear 6-a planet carrier assembly 5-a second planet gear 7-a third planet gear 10-a third sun gear 12-a second half axle 13.

In the present embodiment, the first left planet gear 6 may be a gear wheel shaft (not shown in the figure), the gear shaft of the gear wheel shaft is sleeved on the first planet gear axle 53, the second planet gear 7 may be sleeved on the gear shaft of the gear wheel shaft (namely, the second planet gear 7 is sleeved on the axle of the first planet gear structure as previously stated), and the second planet gear 7 may be located on the left side or the right side of the ring gear portion in the gear wheel shaft; of course, the second planet gear 7 may be directly sleeved on the first planet gear shaft 53.

With reference to FIG. 2, preferably, the first planet gear structure includes a first left planet gear 6 and a first right planet gear 9, where the first left planet gear 6 and the first right planet gear 9 are fixedly connected via a connecting shaft, the connecting shaft is sleeved on the first planet gear shaft 53, the first left planet gear 6 is meshed with the first sun gear 2, the first right planet gear 9 is meshed with the ring gear 8, and the second planet gear 7 is sleeved on the connecting shaft (namely, the second planet gear 7 is sleeved on the gear shaft of the first planet gear structure as hereinbefore described); alternatively, the second planet gear 7 is sleeved on the first planet gear shaft 53.

In the present embodiment, the first planet gear structure includes not only the first left planet gear 6 but also the first right planet gear 9. In this case, the first left planet gear 6 is not meshed with the ring gear 8, but the first right planet gear 9 is meshed with the ring gear 8. The first right planet gear 9 is fixedly connected to the first left planet gear 6 via a hollow connecting shaft (not shown in the figure), and the connecting shaft is rotatably connected to the planet carrier assembly 5 (namely, the connecting shaft is sleeved on the first planet gear shaft 53). In this way, a torque transmission path of the motor 3 to the first half axle 1 is: a motor 3-a first sun gear 2-a first left planet gear 6-a first right planet gear 9-a planet carrier assembly 5-a second planet gear 7-a second sun gear 14-a first half axle 1; a torque transmission path of the motor 3 to the second half axle 13 is: a motor 3-a first sun gear 2-a first left planet gear 6-a first right planet gear 9-a planet carrier assembly 5-a second planet gear 7-a third planet gear 10-a third sun gear 12-a second half axle 13. By adding the first right planet gear 9, it is possible to provide the motor driving assembly with a larger transmission ratio.

In the present embodiment, since the second planet gear 7 is sleeved on the connecting shaft between the first left planet gear 6 and the first right planet gear 9, it is possible to reduce the planet gear shaft of the second planet gear 7 itself, to reduce the cost and weight, to share the planet carrier assembly 5, and to reduce the axial length and weight. The first left planet gear 6 may be one common circular gear, and the first right planet gear 9 may be one gear wheel shaft (not shown in the figure); the second planet gear 7 and the first left planet gear 6 may be sleeved on the gear shaft of the gear wheel shaft successively, and then the gear shaft of the gear wheel shaft is sleeved on the first planet gear shaft 53, and at this time, the second planet gear 7 is located between the first left planet gear 6 and the ring gear of the gear wheel shaft; or the first left planet gear 6 may be a common circular gear, and the first right planet gear 9 may be one gear wheel shaft, and the first left planet gear 6 and the second planet gear 7 are successively sleeved on the gear shaft of the gear wheel shaft, and then the gear shaft of the gear wheel shaft is sleeved on the first planet gear shaft 53, and at this time, the second planet gear 7 is located on the side, away from the ring gear of the gear wheel shaft, of the first left planet gear 6; or the first right planet gear 9 may be a common circular gear, the first left planet gear 6 may be a gear wheel shaft (not shown in the figure), the second planet gear 7 and the first right planet gear 9 may be sleeved on the gear shaft of the gear wheel shaft successively, and then the gear shaft of the gear wheel shaft is sleeved on the first planet gear shaft 53, and at this time, the second planet gear 7 is located between the first right planet gear 9 and the ring gear of the gear wheel shaft; alternatively, the first right planet gear 9 may be a common circular gear, and the first left planet gear 6 may be a gear wheel shaft, and the first right planet gear 9 and the second planet gear 7 are successively sleeved on the gear shaft of the gear wheel shaft, and then the gear shaft of the gear wheel shaft is sleeved on the first planet gear shaft 53, and in this case, the second planet gear 7 is located on the side, away from the ring gear of the gear wheel shaft, of the first right planet gear 9. Of course, instead of being sleeved on the connecting shaft, the second planet gear 7 may be sleeved directly on the first planet gear shaft 53 and be located on the left side of the first left planet gear 6 or on the right side of the first right planet gear 9.

Referring to FIG. 2, alternatively, the first left planet gear 6 and the first right planet gear 9 are respectively provided in a number of at least three.

In the present embodiment, the first left planet gear 6 is provided with in a number of at least three, and the first right planet gear 9 is also provided in a number of at least three, so as to ensure that the transmission of the motor 3 to the planet carrier assembly 5 is more stable, and the axial position of each first left planet gear 6 with respect to the planet carrier assembly 5 is the same, and the axial position of each first right planet gear 9 with respect to the planet carrier assembly 5 is the same, without increasing the space occupation of the motor driving assembly.

Referring to FIG. 2, alternatively, the second planet gears 7 are provided in a number of at least three, one of the third planet gears 10 being meshed between each of the second planet gears 7 and the third sun gear 12.

In the present embodiment, the second planet gears 7 are provided in a number of at least three, and each second planet gear 7 is meshed with a third sun gear 12 via a third planet gear 10, so as to ensure that the transmission of the planet carrier assembly 5 to the second sun gear 14 and the third sun gear 12 is more stable, and that the axial position of each second planet gear 7 on the planet carrier assembly 5 is the same, and the axial position of each third planet gear 10 on the planet carrier assembly 5 is the same, without increasing the space occupation of the motor driving assembly.

Illustratively, for example, the number of teeth of the first sun gear 2, the first left planet gear 6, the first right planet gear 9, the ring gear 8, the second planet gear 7, the second sun gear 14, the third planet gear 10, and the third sun gear 12 is 29, 62, 19, 80, 23, 25, 23, 25, respectively, and assuming that the rotational speed of the motor 3 is N, the rotational speeds of the second sun gear 14 and the third sun gear 12 are N/10.002 when the automobile is running straight. The rotational speed of the second sun gear 14 is N/20.004 and the rotational speed of the third sun gear 12 is 3N/20.004 when the automobile turns left, assuming that the differential is 50%; similarly, when the automobile turns right, the rotational speed of the third sun gear 12 is N/20.004 and the rotational speed of the second sun gear 14 is 3N/20.004, assuming that the difference rate is 50%.

An automobile transmission system according to another embodiment of the present invention includes a motor driving assembly as hereinbefore described.

Since the technical improvements and technical effects of the automobile transmission system are the same as those of the motor driving assembly, the description of the automobile transmission system will not be repeated.

Yet another embodiment of the present invention is an automobile including an automobile transmission system as hereinbefore described.

Since the technical improvements and technical effects of the automobile are the same as those of the automobile transmission system, the description of the automobile will not be repeated.

The terms "first" and "second" are used for descriptive purposes only and shall not be construed as indicating or implying relative importance, or implicitly specifying the quantity of the indicated technical features. Thus, features defined with "first" and "second" may explicitly or implicitly include at least one such feature.

## Claims

1. A motor driving assembly for driving a first half axle (1) and a second half axle (13), **characterized by** comprising a motor (3), a transmission mechanism and a housing (15), wherein the transmission mechanism comprises a planet carrier assembly (5), a first sun gear (2), a first planet gear structure, a second planet gear (7), a third planet gear (10) and a ring gear (8); a second sun gear (14) is arranged on a first half axle (1); a third sun gear (12) is arranged on a second half axle (13); the two ends of the planet carrier assembly (5) are rotatably connected to the housing (15); the ring gear (8) is fixedly connected into the housing (15); the first planet gear structure and the third planet gear (10) are respectively rotatably connected to the planet carrier assembly (5); the second planet gear (7) is sleeved on a gear shaft of the first planet gear structure or is rotatably connected to the planet carrier assembly (5); the first planet gear structure is meshed with the ring gear (8); the second planet gear (7) is meshed with the second sun gear (14); the third planet gear (10) is separately meshed with the second planet gear (7) and the third sun gear (12); the motor (3) is drivingly connected to the first sun gear (2); and the first sun gear (2) is meshed with the first planet gear structure.

2. The motor driving assembly according to claim 1, **characterized in that** the second sun gear (14) and the third sun gear (12) have a same number of teeth.

3. The motor driving assembly according to claim 1, **characterized in that** the second sun gear (14) is arranged at an end of the first half axle (1) adjacent to the second half axle (13) and the third sun gear (12) is arranged at an end of the second half axle (13) adjacent to the first half axle (1).

4. The motor driving assembly according to claim 1, **characterized in that** the planet carrier assembly (5) comprises a first side planet carrier (51), a second side planet carrier (52), a first planet gear shaft (53) and a second planet gear shaft (54), the first side planet carrier (51) and the second side planet carrier (52) are connected via the first planet gear shaft (53), the first planet gear structure is sleeved on the first planet gear shaft (53), and the third planet gear (10) is rotatably connected to the second side planet carrier (52) via the second planet gear shaft (54).

5. The motor driving assembly according to claim 4, **characterized in that** the first planet gear structure comprises a first left planet gear (6) sleeved on the first planet gear shaft (53), the first left planet gear (6) being meshed with the first sun gear (2) and the ring gear (8), respectively.

6. The motor driving assembly according to claim 4, **characterized in that** the first planet gear structure comprises a first left planet gear (6) and a first right planet gear (9), the first left planet gear (6) and the first right planet gear (9) are fixedly connected via a connecting shaft, the connecting shaft is sleeved on the first planet gear shaft (53), the first left planet gear (6) is meshed with the first sun gear (2), the first right planet gear (9) is meshed with the ring gear (8), and the second planet gear (7) is sleeved on the connecting shaft or the first planet gear shaft (53).

7. The motor driving assembly according to claim 6, **characterized in that** the first left planet gear (6) and the first right planet gear (9) are respectively provided in a number of at least three.

8. The motor driving assembly according to claim 1, **characterized in that** the planet carrier assembly (5) has one end rotatably connected to the housing (15) via a first bearing (4) and the other end rotatably connected to the housing (15) via a second bearing (11);
or/and the second planet gears (7) are provided in a number of at least three, one of the third planet gears (10) being meshed between each of the second planet gears (7) and the third sun gear (12).

9. An automobile transmission system, **characterized by** comprising the motor driving assembly according to any one of claims 1 to 8.

10. An automobile, **characterized by** comprising the automobile transmission system according to claim 9.
